# EUROPEAN PATENT APPLICATION

(11) **EP 1 108 353 A1**
(43) Date of publication of application: **20.06.2001**
(21) Application number: 00204194.5
(22) Date of filing: 27.11.2000
(51) Int. Cl.: A01G 9/02

(54) **Method for placing a plant bulb in a holder as well as such a holder.**

(30) Priority: 14.12.1999 NL 1013837
(71) Applicant: SYNPRODO PLANTPAK B.V., 6603 BM Wijchen (NL)
(72) Inventor: Mortko, Stanislaw Adam Julian, 5144 GH Waalwijk (NL)
(74) Representative: Veldman-Dijkers, Cornelia G.C., Ir.

(57) **Abstract**

A method for placing a plant bulb in a holder, which holder comprises at least one cavity which is bounded by walls and which extends along a central axis. In order to clamp down the plant bulb in the cavity, a main axis of the plant bulb, which extends transversely to the central axis, is first aligned with a relatively long main axis of the cavity, which extends transversely to the central axis. Then the plant bulb is pivoted about said central axis with respect to the cavity until the main axis of the plant bulb coincides with a second main axis of the cavity which extends transversely to the central axis, which second main axis is shorter than the first main axis, whereby the plant bulb is clamped down between the walls disposed near the ends of said second main axis.

## Description

Method for placing a plant bulb in a holder as well as such a holder.

The invention relates to a method for placing a plant bulb in a holder, which holder comprises at least one cavity which is bounded by walls and which extends along a central axis, wherein the plant bulb is clamped down in said cavity.

The invention furthermore relates to a holder for a plant bulb, which holder comprises at least one cavity which is bounded by walls and which extends along a central axis.

With a similar method, which is known per se, a plant bulb is pressed into the cavity in a direction parallel to the central axis, whereby a clamping engagement is effected between the walls and the plant bulb by deformation of the plant bulb and/or of the walls of the cavity. With the method that has been known so far no account is taken of the shape of the plant bulb, as a consequence of which a proper clamping engagement is not always obtained, or the bulb is damaged.

The object of the invention is to provide a method wherein a more uniform and consequently better clamping engagement of plant bulbs in cavities is effected.

This objective is accomplished with the method according to the invention in that a main axis of the plant bulb, which extends transversely to the central axis, is aligned with a relatively long main axis of the cavity, which extends transversely to the central axis, after which the plant bulb is pivoted about said central axis with respect to the cavity until the main axis of the plant bulb coincides with a relatively short second main axis of the cavity, which extends transversely to the central axis, whereby the plant bulb is clamped down between the walls disposed near the ends of said second main axis.

It has become apparent that plant bulbs of tulips and irises, for example, are slightly oval in shape. Plant bulbs of this kind have a main axis that coincides with the longitudinal axis of the oval shape, therefore. Before the plant bulb is placed into the cavity, said main axis is aligned with a first, relatively long main axis of the cavity. In the case of a substantially square cavity, said first main axis may for example coincide with the diagonal of the square cavity. After the plant bulb has been placed in the cavity, the plant bulb is pivoted with respect to the cavity, whereby the main axis of the plant bulb will include an angle with the first main axis of the cavity and coincide with a second, shorter main axis of the cavity. In the case of a square cavity this may for example be a main axis which includes an angle of 45° with the diagonal. If the original length of the main axis of the plant bulb is greater than the original length of the second main axis of the cavity, such pivoting can only take place under deformation of the cavity and/or of the plant bulb, whereby the plant bulb is clamped down in the cavity.

One embodiment of the method according to the invention is characterized in that the plant bulb is clamped down in the cavity under elastic deformation of the walls.

Owing to the elastic deformation of the walls, the plant bulb will remain undamaged, whilst a proper clamping engagement of the plant bulb in the cavity can nevertheless be guaranteed.

Another embodiment of the method according to the invention is characterized in that at least one wall includes ribs extending substantially parallel to the central axis.

The ribs provide a proper clamping engagement of the plant bulb in the cavity, wherein the ribs effectively prevent the plant bulb from pivoting back undesirably in the cavity.

The invention will be explained in more detail hereafter with reference to the drawings, wherein:
Figures 1A-1C are a plan view, a front view and a side view, respectively, of a holder according to the invention;
Figure 2 is a perspective view of a cavity of the holder that is shown in Figures 1A-1C, in which a plant bulb is present;
Figure 3 is a top plan view of the cavity that is shown in Figure 2; and
Figure 4 is a perspective view of a plant bulb that is clamped down in the cavity.

Parts corresponding to each other are indicated by the same numerals in the figures.

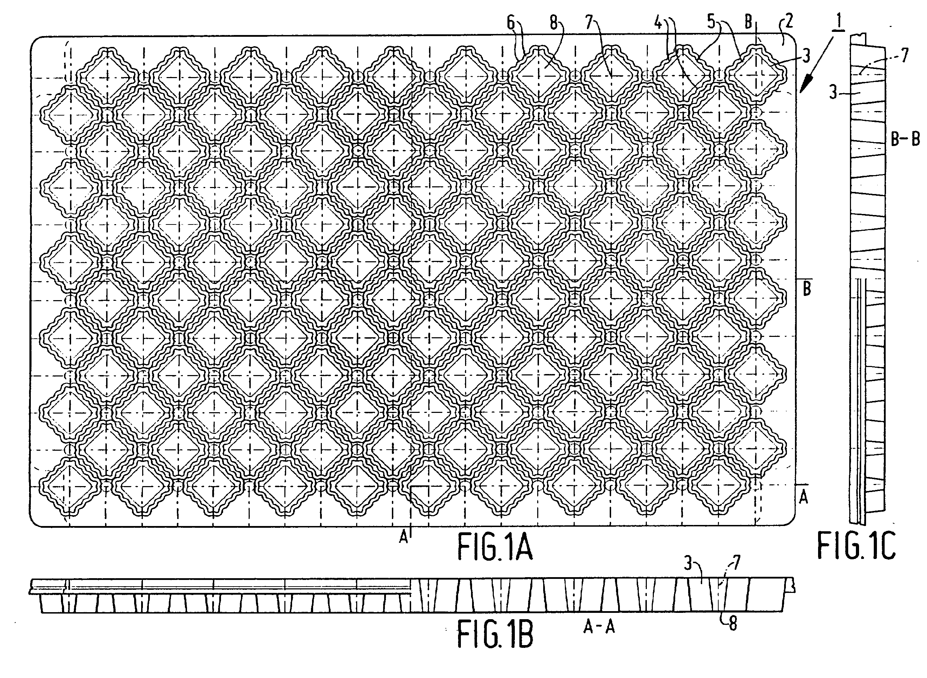

Figures 1A-1C show a support 1 according to the invention in top plan view, front view and side view, respectively. Support 1 comprises a plate 2 formed of plastic material, in which a number of cavities 3 have been formed. Each cavity 3 is bounded by two walls 4 extending parallel to each other and two walls extending transversely thereto. Walls 4, 5 are practically identical in length, as a result of which each cavity 3 is substantially square. Cavity 3 extends conically from an upper side to the bottom side. As a result of this configuration, a plant bulb cannot fall through cavity 3, whilst in addition the formed product can easily be removed from the mould when forming the holder 1 from plastic material. Walls 4, 5 include corrugations 6 for enhancing the clamping engagement of the plant bulb in cavity 3. Each cavity 3 extends along a central axis 7. Near the bottom side, cavity 3 is provided with an opening 8 for the supply of water and air, for example, to a plant bulb present in cavity 3.

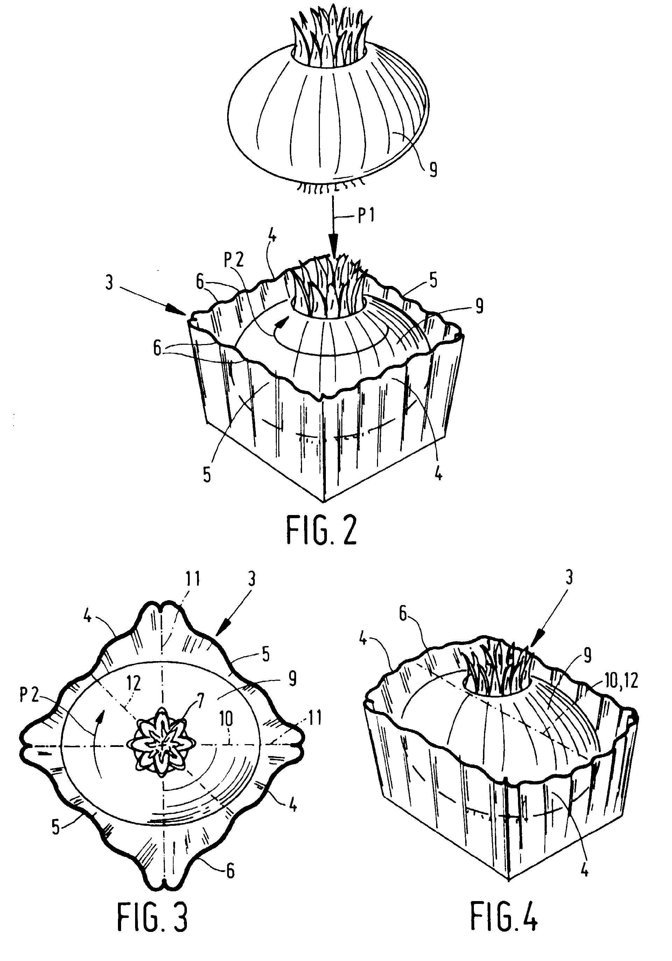

Figure 2 is a perspective view of a cavity 3 bounded by walls 4, 5.

A plant bulb 9 is to be placed into cavity 3. As is clearly shown in Figure 3, plant bulb 9 is slightly oval in shape, seen in top plan view, with a main axis 10 extending parallel to the longitudinal axis of the oval. The cavity 3, which is substantially square, seen in top plan view, has two main axes 11 extending transversely to each other, which axes form the diagonals of the square. Cavity 3 furthermore has two shorter main axes 12 extending transversely to each other, which intersect central axis 7 and which extend between walls 4 and 5, respectively, which are disposed opposite each other. First main axes 11 include an angle of 45° with second main axes 12.

When plant bulb 9 is to be placed into cavity 3, the main axis 10 of plant bulb 9 is aligned with the relatively long first axis 11 of cavity 3, so that the two main axes 10, 11 will extend substantially parallel to each other. Then the plant bulb 9 is moved in a direction indicated by arrow P1, parallel to central axis 7, and introduced into cavity 3. Then plant bulb 9 is pivoted through an angle of 45° about central axis 7 in the direction indicated by arrow P2, so that the main axis 10 of the plant bulb 9 will extend parallel to the relatively short second main axis 12 in cavity 3. The length of the second main axis 12 has been selected such that said second main axis is shorter in length than the main axis 10 of plant bulbs 9. As a result, plant bulb 9 will come into contact with the walls 4 of the cavity 3 upon being pivoted in the direction indicated by arrow P2 and force said walls 4 apart under elastic deformation thereof. A clamping engagement is thereby effected between plant bulb 9 and the walls of cavity 3.

Figure 4 is a perspective view of a cavity 3 with a plant bulb 9 clamped down therein, wherein the main axis 10 of the plant bulb 9 extends substantially parallel to the second main axis 12 of cavity 3. As is clearly shown in Figure 4, the walls 4 disposed near the ends of second main axis 12 are forced apart thereby. For a better understanding of the invention, the extent to which walls 4 are deformed is exaggerated in Figure 4.

Once the plant bulb has been placed in cavity 3, nutrients and water can be supplied to the plant bulb 9 through opening 8. As a result, a plant will start to grow from plant bulb 9, whereby the plant takes up nutrients from the plant bulb 9. At the same time roots will start to grow on the underside of the plant bulb 9. When the dimension of the plant bulb 9 decreases owing to the growth of both the plant and the roots, the plant bulb will be clamped down less firmly in the cavity 3, and after the plant that has grown from the plant bulb 9 has reached the desired size, the plant bulb 9 can easily be pulled out of cavity 3 in a direction opposed to the direction indicated by arrow P1.

Of course it is also possible thereby to have the plant bulb 9 turn through 45° in a direction opposed to the direction indicated by arrow P2 first, so that the main axis 10 will coincide with the longer main axis 11 of cavity 3 again.

It is also possible to turn plant bulb 9 through 90° in a direction opposed to the direction indicated by arrow P2 first, so that the plant bulb will be clamped between the opposed walls 5.

Cavity 3 may also have a rectangular, hexagonal, oval or other shape, providing that it comprises at least two main axes having different lengths.

## Claims

1. A method for placing a plant bulb in a holder, which holder comprises at least one cavity which is bounded by walls and which extends along a central axis, wherein the plant bulb is clamped down in said cavity, characterized in that a main axis of the plant bulb, which extends transversely to the central axis, is aligned with a relatively long main axis of the cavity, which extends transversely to the central axis, after which the plant bulb is pivoted about said central axis with respect to the cavity until the main axis of the plant bulb coincides with a relatively short second main axis of the cavity, which extends transversely to the central axis, whereby the plant bulb is clamped down between the walls disposed near the ends of said second main axis.

2. A method according to claim 1, characterized in that the plant bulb is clamped down in the cavity under elastic deformation of the walls.

3. A method according to claim 1 or 2, characterized in that at least one wall includes ribs extending substantially parallel to the central axis.

4. A holder for a plant bulb, which holder comprises at least one cavity which is bounded by walls and which extends along a central axis, characterized in that said cavity comprises first and second main axes extending transversely to the central axis, which longer, first main axis includes an angle with the shorter, second main axis.

5. A holder according to claim 4, characterized in that the walls disposed near ends of the second main axis are capable of elastic deformation.

6. A holder according to claim 4 or 5, characterized in that at least one wall includes ribs extending substantially parallel to each other.

7. A holder according to any one of the claims 4 - 6, characterized in that the cavity is substantially square in a plane extending transversely to the central axis, with the first main axis substantially coinciding with the diagonal of the square, and the second main axis extending substantially parallel to one side of said square.
